# EUROPEAN PATENT APPLICATION

(11) **EP 4 109 369 A1**
(43) Date of publication of application: **28.12.2022**
(21) Application number: 22161854.9
(22) Date of filing: 14.03.2022
(51) Int. Cl.: G06Q 20/20, G07G 1/00

(54) **SELF-SERVICE CHECKOUT DEVICE AND PROGRAM**

(30) Priority: 22.06.2021 JP 2021103333
(71) Applicant: Toshiba TEC Kabushiki Kaisha, Tokyo 141-8562 (JP)
(72) Inventor: SAITOU, Takahiro, Shinagawa-ku, Tokyo, 141-8562 (JP)
(74) Representative: Hoffmann Eitle

(57) **Abstract**

According to an embodiment, a self-checkout device has a commodity placing section where a commodity to be purchased can be placed prior to commodity registration processing and a commodity storing section where a commodity can be placed after registration. A commodity registration camera is positioned to capture images for commodity registration processing. A processor is configured to cause the commodity registration camera to capture images of a symbol attached to the commodity passing near the commodity registration camera. The camera also images the vicinity of the placing section and the storage section. Acquired images are stored in a data storage device. The processor executes commodity registration processing based on the commodity symbols and then commodity settlement processing after the commodity registration.

## Description

### CROSS-REFERENCE TO RELATED APPLICATION

This application is based upon and claims the benefit of priority from Japanese Patent Application No. 2021-103333, filed June 22, 2021, the entire contents of which are incorporated herein by reference.

### FIELD

Embodiments described herein relate generally to a self-service checkout device and a program to be executed by such a device.

### BACKGROUND

A self-service checkout device that can be installed at a store, such as a retail store or a supermarket, is known. With such a device, a customer operates the device by himself or herself to perform commodity registration and then payment processing for checkout. In some self-service checkout devices, the customer can place a shopping basket or the like on a table, then take items from the basket one by one to register each item using and a commodity reading unit or scanner to read a symbol such as a barcode or a two-dimensional code on the item for registering the item in a sale transaction. In stores that permit use of shopping carts, a customer generally brings a shopping cart alongside the self-service checkout device (also referred to as a self-checkout device), and then takes items from the cart one by one, and then uses the reading unit or scanner on each item. Once the commodity symbol has been read (registered) using the reading unit (or scanner), the customer then put the item in a shopping bag, a basket, or the like provided on a table provided for this purpose. After all items in the sales transaction have been registered using the reading unit or the like, the customer next performs the operations necessary for settlement of the transaction. That is, the customer pays for the registered items at the self-checkout device.

Since the customer performs the registration and payment operations alone, it may be more likely for fraud to occur than might otherwise be the case when a store clerk conducts the registration and/or payment operations. Examples of potential fraud by the customer include failures to take every item from the shopping basket or cart (to later remove such item surreptitiously without payment), failures to actually register an item taken from the shopping basket or cart, intentionally misregistering an item using the reading unit, use of fraudulent payment methods or means, failures to pay, bagging an unregistered item as it were a registered item, etc. As one countermeasure, a monitoring camera can be provided for detecting fraud events. Such a monitoring camera is often installed above a self-service checkout device. The monitoring camera thus points downward to acquire images of customer movements at least during the customer's actual operation of the self-service checkout device. For example, the monitoring camera monitors the position where the customer takes out items from a basket or cart, the position the reading unit is used to read symbols on the items, the position on the self-service checkout device where the customer deposits money or makes payments, and the position where the customer bags the items. By imaging such positions, the monitoring camera captures images of the customer's motions related to taking out the items from the basket or the cart, the motions related to reading of the symbols on the items using the reading unit, the motions related to making payments, and the motions related to bagging of registered items commodity.

However, in some instances, the monitoring camera may be unable to acquire images of each relevant position at all relevant times due to fixed blind spots or temporary view obstructions caused by customer movements and/or customer positioning and/or posture in front of the self-service checkout device.

Hence, there is a need for a self-checkout device and a program providing more accurate and reliable monitoring of customer operations and movements.

### SUMMARY OF THE INVENTION

One of the objects of the present invention is to improve prior art techniques and overcome at least some of the prior art problems as for instance above illustrated.

According to a first aspect of the present invention, it is provided a self-checkout device, comprising a commodity placing section where a commodity to be purchased can be placed prior to commodity registration processing; a commodity registration camera is positioned to capture images for the commodity registration processing; a commodity storing section where the commodity can be stored in a commodity storing body after registration; and a processor configured to cause the commodity registration camera to capture images of a symbol attached to a commodity that is passing near the commodity registration camera and images of a vicinity of the placing section and a vicinity of the storage section, store the images in a data storage device; execute the commodity registration processing of the commodity based on the image of the commodity symbol; and execute commodity settlement processing after the commodity registration processing.

Optionally, in the self-checkout device according to the first aspect of the invention, the commodity registration camera is positioned to face a customer operating the self-checkout device.

Optionally, in the self-checkout device according to the first aspect of the invention, the commodity registration camera is directed substantially perpendicular to a front surface of the self-checkout device.

Optionally, the self-checkout device according to the first aspect of the invention further comprises a money depositing section to which money can be deposited for the commodity settlement processing, wherein the commodity registration camera is further positioned to capture an image of a vicinity of the money depositing section.

Optionally, the self-checkout device according to the first aspect of the invention further comprises a start key for starting the commodity registration processing, wherein the processor stores the captured images after operation of the start key until the end of the commodity settlement processing.

Optionally, the self-checkout device according to the first aspect of the invention further comprises a display device on which the start key is displayed.

Optionally, the self-checkout device according to the first aspect of the invention further comprises a monitoring camera at a position different from the commodity registration camera, wherein the processor is further configured to cause the monitoring camera to capture images of a cart section where a shopping cart can be placed, and store the captured images in the data storage device.

Optionally, in the self-checkout device according to the first aspect of the invention, the processor is configured to acquire additional images from a monitoring camera mounted above the self-checkout device and store the additional images in the data storage device.

Optionally, in the self-checkout device according to the first aspect of the invention, the monitoring camera acquires images of a cart section where a shopping cart can be placed.

Optionally, in the self-checkout device according to the first aspect of the invention, the commodity registration camera is positioned to also capture images of a cart section where a shopping cart can be placed.

Optionally, in the self-checkout device according to the first aspect of the invention, the processor is further configured to cause the commodity registration camera to capture an image of customer motions during operation of the self-checkout device.

Optionally, in the self-checkout device according to the first aspect of the invention, the commodity registration camera captures images continuously from the start of the commodity registration processing until the end of the commodity settlement processing.

According to a second aspect the present invention, it is provided a self-checkout device, comprising a commodity placing section where a commodity to be purchased can be placed prior to commodity registration processing and commodity settlement processing; a commodity registration camera configured to capture images of items passed in front of commodity registration window for the commodity registration processing; a monitoring camera configured to capture images of a cart section where a shopping cart can be placed; a commodity storing section where the item can be placed after commodity registration processing; and a processor configured to cause the commodity registration camera to begin imaging and capture an image of a commodity symbol attached to the item that passes in front of the commodity registration window during commodity registration, store a plurality of images captured by the commodity registration camera during the commodity registration processing, and execute commodity settlement processing of the items registered in the commodity registration processing, wherein the commodity registration camera has a field of view including at least portions of commodity placing section and the commodity storing section, and the processor is configured to store images captured by the commodity registration camera with and without the detection of a commodity symbol in the images.

Optionally, in the self-checkout device according to the second aspect of the invention, images are captured by the commodity registration camera continuously from the start of the commodity registration processing to the end of the commodity settlement processing.

Optionally, in the self-checkout device according to the second aspect of the invention, the commodity registration camera begins acquiring images when a cart is detected in the cart section.

Optionally, in the self-checkout device according to the second aspect of the invention, the commodity registration camera begins acquiring images when a registration start key is pressed on a display screen of the self-checkout device.

According to a third aspect of the present invention, it is provided non-transitory computer-readable medium storing a program which, when executed, causes a self-checkout device to perform a method comprising causing a commodity registration camera of a self-checkout device to begin acquiring images; capturing an image of a commodity symbol attached to a commodity, capturing images of a vicinity of a commodity placing section and a vicinity of a commodity storing section; storing the captured images in a data storage device; executing commodity registration processing based on the image of the commodity symbol; and executing commodity settlement processing based on the commodity registration processing.

Optionally, in the non-transitory computer-readable medium according to third aspect of the invention, the commodity registration camera acquires images continuously from the start of the commodity registration processing until the end of the settlement processing and the continuously captured images are stored in the data storage section.

Optionally, in the non-transitory computer-readable medium according to third aspect of the invention, the commodity registration camera begins imaging when a shopping cart is detected in a cart placing section.

Optionally, in the non-transitory computer-readable medium according to third aspect of the invention, the commodity registration camera begins imaging when a start button on the shelf-checkout device is pressed.

### BRIEF DESCRIPTION OF THE DRAWINGS

FIG. 1 depicts a self-checkout POS terminal according to an embodiment.
FIG. 2 is an enlarged diagram of part of a self-POS terminal according to an embodiment.
FIG. 3 is an explanatory diagram illustrating a self-checkout POS terminal being operated by a customer in a side view according to an embodiment.
FIG. 4 is an explanatory diagram illustrating a self-checkout POS terminal being operated by a customer in a front view according to an embodiment.
FIG. 5 is a block diagram illustrating a configuration of a self-checkout POS terminal according to an embodiment.
FIG. 6 is a block diagram illustrating a configuration a self-checkout POS terminal according to an embodiment.
FIG. 7 is a flowchart of control processing by a self-checkout POS terminal according to an embodiment.

### DETAILED DESCRIPTION

According to one embodiment, a self-checkout device includes a commodity placing section where a commodity to be purchased can be placed prior to commodity registration processing and a commodity storing section where a commodity can be placed after registration. A commodity registration camera is positioned to capture images for commodity registration processing. A processor is configured to cause the commodity registration camera to capture images of a symbol attached to the commodity passing near the commodity registration camera. The camera also images the vicinity of the placing section and the storage section. Acquired images are stored in a data storage device or the like. The processor executes commodity registration processing based on the commodity symbols and then commodity settlement processing after the commodity registration.

Some example embodiments of a self-checkout device will be described with reference to the accompanying drawings.

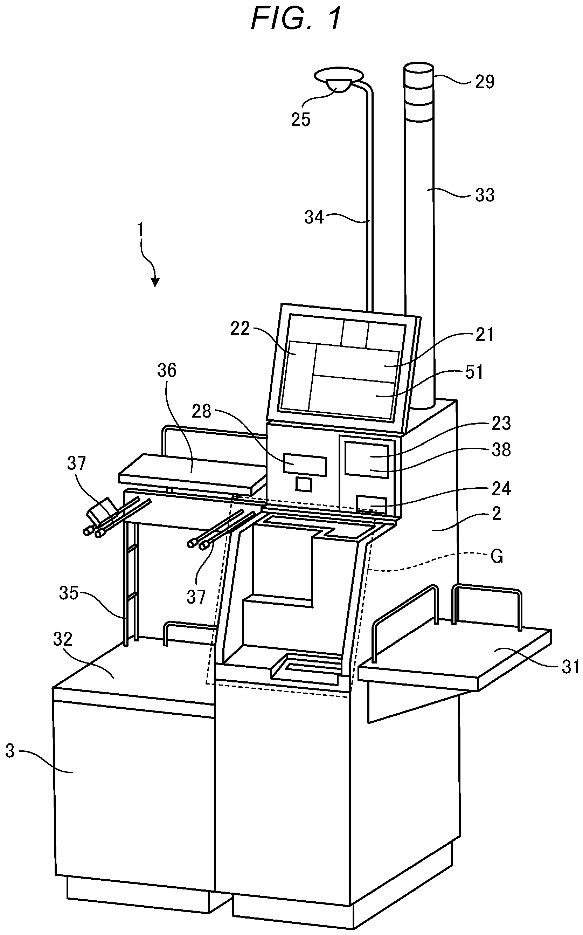

A self-service or self-checkout point-of-sales (POS) terminal 1 is illustrated in FIG. 1. The self-checkout POS terminal 1 allows a customer to perform commodity registration processing and settlement processing. The self-checkout POS terminal 1 includes a component for reading a symbol, such as a barcode or a two-dimensional code, attached to a commodity being sold at a store, a component that obtains commodity information based on the read symbol and then stores the obtained commodity information, and a component that performs the commodity settlement processing based on the stored commodity information. A customer operates the self-checkout POS terminal 1 for the commodity registration processing and settlement processing. The self-checkout POS terminal 1 executes the commodity registration processing for a commodity being purchased and then the commodity settlement processing for the registered commodity based on the terminal operations by the customer.

The commodity registration processing includes processing for obtaining the required commodity information, such as a commodity name and a price of the commodity, based on a commodity code identifying the commodity associated with the commodity symbol, processing for displaying the commodity information on a display or the like, and processing for storing the commodity information in a memory. The commodity settlement processing includes processing for displaying settlement information based on the registered commodity information, such as a total amount and a change due amount, relating to the transaction with the customer. The commodity settlement processing also includes processing for dispensing a transaction receipt or the like.

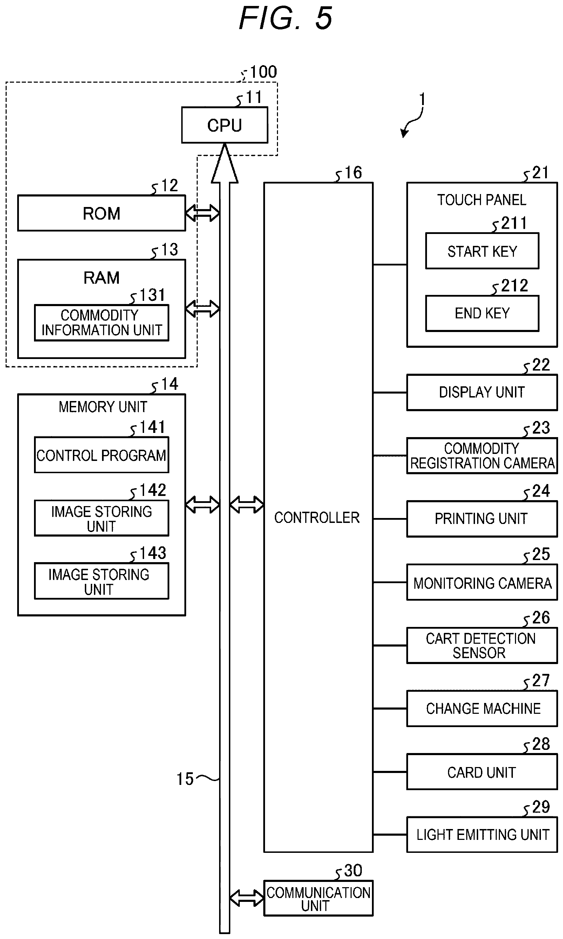

As illustrated in FIG. 1, the self-checkout POS terminal 1 includes a first housing 2 and a second housing 3. The first housing 2 accommodates therein a change machine 27 and a control unit 100 (see FIG. 5). The change machine 27 in this examples functions as a coin change machine and a bill change machine. The change machine 27 stores money deposited from a customer P according to denomination or type. The change machine 27 dispenses change to the customer P according to the difference in the initial payment amount tendered by the customer and the total amount due for the transaction. The control unit 100 executes control processing of the self-checkout POS terminal 1.

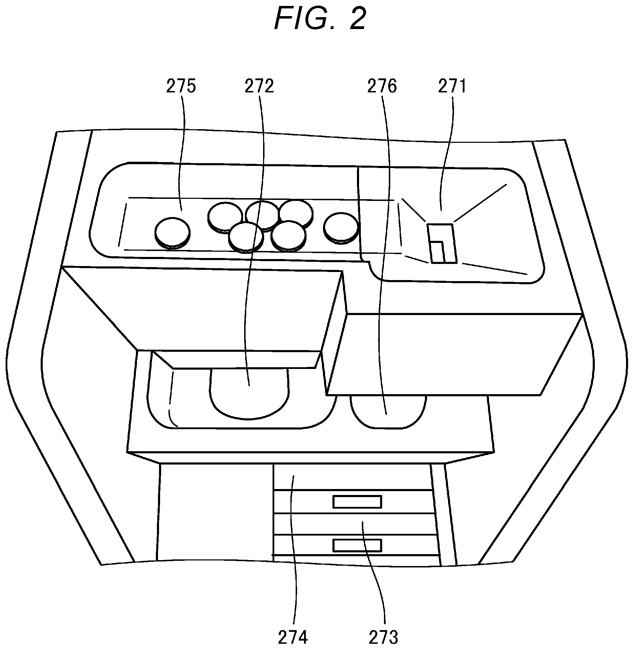

FIG. 2 is an enlarged view of the vicinity of part G depicted in FIG. 1 for the self-service POS terminal 1. As illustrated in FIG. 2, the first housing 2 includes a money depositing port 271 for depositing coins into the change machine 27 and a money dispensing port 272 for dispensing coins from the change machine 27. A coin placing section 275 is connected to the money depositing port 271. In the example of FIG. 2, coins are placed in the coin placing section 275. The coins initially placed in the coin placing section 275 then moved to the money depositing port 271 and deposited into the change machine 27. The first housing 2 includes a money depositing port 273 for depositing bills into the change machine 27 and a money dispensing port 274 for dispensing bills from the change machine 27. The money depositing port 271 and the money depositing port 273 may be referred to as money depositing sections.

The customer P places coins in the coin placing section 275, moves the coins toward the money depositing port 271 and thus deposits them for payment. The customer P can also deposit bills via the money depositing port 273. The self-checkout POS terminal 1 stores the deposited money in the change machine 27 by denomination. The self-checkout POS terminal 1 dispenses coins and bills from the change machine 27 to the money dispensing port 272 as change to be returned to the customer P. Bills being dispensed as change to the customer P as dispensed from the change machine 27 to the money dispensing port 274. The self-service POS terminal 1 can discharge such things as fake, deformed or foreign coins among deposited coins via a rejection section 276 to the money depositing port 271.

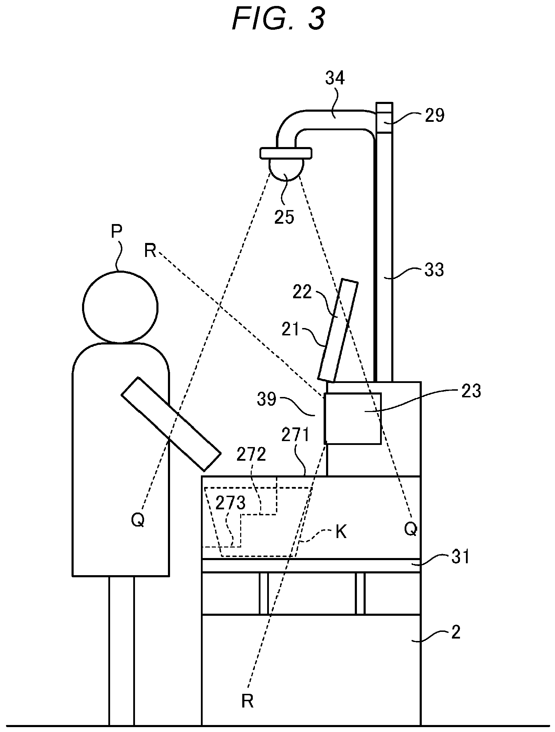

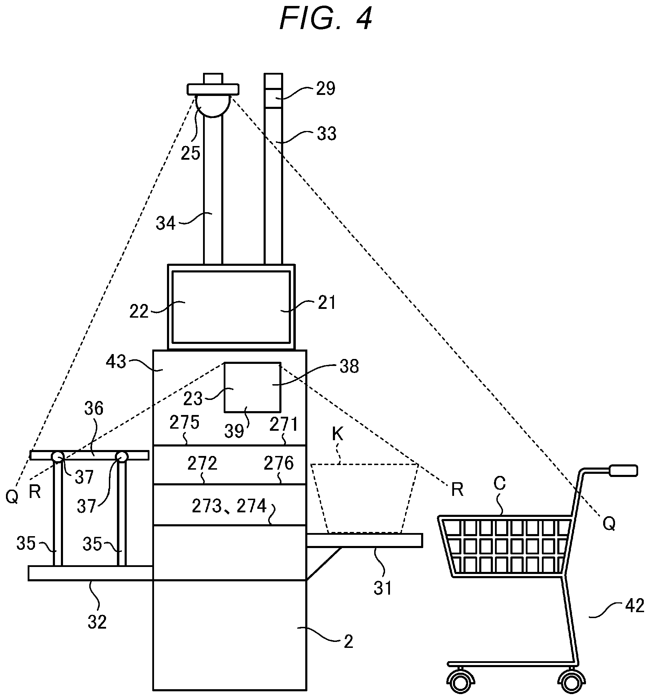

Referring back to FIG. 1, the first housing 2 includes a basket placing table 31 on its right side-surface. The basket placing table 31 is for a customer P to place a basket K (see FIGS. 3 and 4) that accommodates commodities to be purchased (unregistered items) . The second housing 3 is on the opposite side from the basket placing table 31, that is adjacent to a left side-surface of the first housing 2. The second housing 3 includes a shopping bag table 32. The shopping bag table 32 is used for a customer P to pack registered commodities into a shopping bag or other storage container. In some instances, commodities may be directly placed on the basket placing table 31 without being put in a basket K.

The shopping bag table 32 includes two columns 35 extending upward from an upper surface of the shopping bag table 32, a temporary placing table 36 formed flat at an upper part of the columns 35, and two extending bars 37 extending substantially horizontally from the temporary placing table 36. The extending bars 37 are for holding a shopping bag (as one example of the commodity storing body) . For example, the shopping bag is set on the shopping bag table 32 in a state in which its grips or handles are caught by the extending bars 37 and opened to make it easy to put a commodity therein. The temporary placing table 36 is for temporarily placing registered commodities, especially fragile commodities (for, example, tofu, eggs, etc.) and the like. The commodities placed on the temporary placing table 36 will typically be put in the shopping bag last.

The first housing 2 accommodates the commodity registration camera 23 and a printing unit 24. The commodity registration camera 23 is for the commodity registration and includes a reading window 38. The reading window 38 is provided on a surface of the first housing 2 that faces toward the customer. For example, the reading window 38 is arranged to be on an erected surface 43 (see FIG. 4) of the first housing 2 of the self-checkout POS terminal 1.

The commodity registration camera 23 includes a Charge Coupled Device (CCD) sensor to capture an image of an object that passes in front of the reading window 38. The commodity registration camera 23 captures an image of a commodity and a commodity symbol (a barcode, a two-dimensional code, or the like) attached to the commodity to read the commodity symbol. The printing unit 24 prints the commodity information and the settlement information of a commodity subjected to the commodity settlement processing and dispenses a receipt with such information printed thereon. The printing unit 24 includes, for example, a thermal head. The self-checkout POS terminal 1 includes a card unit 28 in an area to the left of the reading window 38 of the first housing 2. The card unit 28 reads information for identifying a customer P from an inserted credit card, for example. Besides the commodity settlement processing using cash received from a customer P, the self-checkout POS terminal 1 can execute the commodity settlement processing based on the customer identifying information read by the card unit 28.

Besides the commodity symbol, the commodity registration camera 23 can also be used to capture images of the customer P performing registration processing and/or settlement processing. The commodity registration camera 23 may be able to capture images of positions and processing steps that the monitoring camera 25 can not. For example, the commodity registration camera 23 may image the customer P taking out the commodity from the basket K or cart C, the customer P causing the commodity registration camera 23 to read the symbol, customer P depositing money, the customer P bagging the commodities, and the like. The commodity registration camera 23 can thus capture images of various motions by the customer P, such as taking the commodity from the basket K or the cart C, use of the commodity registration camera 23 to read a commodity symbol, depositing money, bagging the commodity, and the like. The commodity registration may continuously acquire images as video data or repeatedly acquire still images at a fixed interval timing or the like (for example, every second) .

The first housing 2 includes a display unit 22 in an upper part thereof. The display unit 22 displays commodity information of a commodity subjected to the commodity registration processing according to the registration operation by a customer P. The display unit 22 displays settlement information involved in the settlement operation by the customer P. The display unit 22 is provided with a display surface 51 that faces towards a customer P who operates the self-checkout POS terminal 1. The display unit 22 includes a touch panel 21 on the display surface 51. If the customer P operates the touch panel 21 at a position corresponding to a key displayed on the display unit 22, the key initiates a designated function or operation.

The self-checkout POS terminal 1 includes, behind the first housing 2, a columnar pole 33 extending upward from an upper surface of the first housing 2. An upper distal end portion of the pole 33 includes a light emitting unit 29 that emits light if a customer P performs operation for calling an attendant, a clerk, or the like of a store upon occurrence of an error or the like. If the light emitting unit 29 emits light, the self-checkout POS terminal 1 transmits information concerning the error or the like to an attendant PC (attendant terminal) via a communication unit 30 (see FIG. 5). The attendant PC displays the received information. The attendant checks the light emission of the light emitting unit 29 and/or the information displayed on the attendant PC and takes countermeasures at the relevant self-checkout POS terminal 1 as needed.

The self-checkout POS terminal 1 includes, behind the first housing 2 and near the pole 33, a columnar pole 34 extending upward from the upper surface of the first housing 2. An upper distal end portion of the pole 34 includes a monitoring camera 25. The monitoring camera 25 is provided to face downwards to an area where a customer P stands. The monitoring camera 25 captures images of various motions of the customer P from its position above the customer P. For example, the monitoring camera 25 captures images of various positions, such as the position where the customer P takes out a commodity from the basket K or the cart C, the position where the customer P uses the monitoring camera 25 to read a commodity symbol, the position where the customer P deposits money, the position where the customer P bags the commodity, and the like. The monitoring camera 25 is installed and adjusted such that these positions are included in an imaging range or monitoring area of the monitoring camera 25. The monitoring camera 25 can thus capture images of various customer motions, such as taking the commodity from the basket K or the cart C, using the monitoring camera 25 to read the commodity symbol, depositing money, bagging the commodity, and the like. The monitoring camera 25 may be a video camera that continuously obtains a moving images (video data) or a still image camera repeatedly acquires still images at fixed intervals or the like (for example, every second).

Certain operations on the self-service POS terminal 1 by the customer P will be explained. FIG. 3 is an explanatory side view diagram related to the operator P operating the self-service POS terminal 1. FIG. 4 is an explanatory front view diagram. In FIG. 4, the customer P is omitted to more clearly show the relevant aspects of the self-service POS terminal 1.

As illustrated in FIGS. 3 and 4, the customer P places the basket K holding commodities to be purchased on the basket placing table 31. The customer P may bring the cart C with commodities to be purchased therein alongside a cart placing section 42 adjacent to the basket placing table 31. The first housing 2 of the self-checkout POS terminal 1 has the erected surface 43. The erected surface 43 is a substantially perpendicular surface. The commodity registration camera 23 includes the reading window 38 on the erected surface 43. The reading window 38 is a substantially perpendicular planar window formed of transparent glass or plastic. The reading window 38 is provided to face towards the customer P.

The customer P operating the self-checkout POS terminal 1 stands in front of the reading window 38. A predetermined region on a customer P side of the reading window 38, that is in front of the reading window 38 of the commodity registration camera 23 is a reading region 39. The reading region 39 is between the reading window 38 and the customer P and closer to the reading window 38. A size and/or a position of the reading region 39 may vary according to depth at which the commodity registration camera 23 can capture an image. If a commodity symbol attached to a commodity passes the reading region 39, the commodity registration camera 23 captures an image of the commodity and an image of the commodity symbol. The commodity registration camera 23 performs a pattern analysis of the imaged commodity symbol to recognize code information indicated by the commodity symbol and acquires, based on the code information, a commodity code for identifying the commodity.

In the example of FIGS. 3 and 4, the commodity registration camera 23 is capable of imaging a range surrounded by dotted lines R. For example, the commodity registration camera 23 is capable of capturing images of vicinities of the basket placing table 31, the reading region 39, the shopping bag table 32, the money depositing port 271, the money dispensing port 272, the coin placing section 275, the money depositing port 273 and the money dispensing port 274 all within the range surrounded by the dotted lines R. By such imaging of the region, the commodity registration camera 23 can capture various motions of the customer P, such as taking the commodity from the basket K placed on the basket placing table 31, moving the commodity through the reading region 39, putting the commodity in a shopping bag, placing coins in the coin placing section 275 and moving the coins toward the money depositing port 271, depositing the coins in the money depositing port 271, taking coin change dispensed to the money dispensing port 272, setting bills in the money depositing port 273, and taking bill change dispensed to the money dispensing port 274.

In the example of FIGS. 3 and 4, the monitoring camera 25 is capable of imaging a range surrounded by dotted lines Q. For example, the monitoring camera 25 is capable of capturing images of vicinities of the basket placing table 31, the reading region 39, the shopping bag table 32, the money depositing port 271, the money dispensing port 272, the coin placing section 275, the money depositing port 273, the money dispensing port 274 and the cart placing section 42. By such imaging of the region, the monitoring camera 25 is capable of capturing various motions of the customer P, such as taking the commodity from the basket K placed on the basket placing table 31, taking the commodity from the cart C placed in the cart placing section 42, moving the commodity through the reading region 39, putting the commodity in a shopping bag, placing coins in the coin placing section 275 and moving the coins toward the money depositing port 271, depositing the coins to the money depositing port 271, taking coin change dispensed to the money dispensing port 272, setting bills in the money depositing port 273, and taking bill change dispensed to the money dispensing port 274.

The customer P places the basket K on the basket placing table 31. Alternatively, the customer P may place the cart C in the cart placing section 42. If the customer P places the basket K on the basket placing table 31, the customer P operates a start key 211 (see FIG. 5) and performs, for all commodities in the basket K, a motion of taking the commodity one-by-one from the basket K, a motion of moving the commodity through the reading region 39 for symbol reading, and a motion of putting the commodity in a shopping bag. After finishing these motions for all commodities, the customer P operates an end key 212 and pays money equal to (or more than, if no exact cash is available in a case of cash payment) a total payment amount of the commodities. For example, the customer P performs a motion of depositing coins to the money depositing port 271 and/or a motion of setting bills in the money depositing port 273. If there is change as a balance of the amount of the payment, the customer P performs a motion of taking coin change from the money dispensing port 272 and/or bill change from the money dispensing port 274.

In the example, the commodity registration camera 23 captures the motion of the customer P taking the commodity one-by-one from the basket K, the motion of the customer P moving the commodity through the reading region 39, the motion of the customer P putting the commodity in the shopping bag, the motion of the customer P placing the coins in the coin placing section 275 and moving the coins toward the money depositing port 271, the motion of the customer P depositing the coins to the money depositing port 271, the motion of the customer P taking the coin change dispensed to the money dispensing port 272, the motion of the customer P setting the bills in the money depositing port 273, and the motion of the customer P taking the bill change dispensed to the money dispensing port 274.

Also if the customer P places the cart C in the cart placing section 42, the customer P operates the start key 211 and performs, for all commodities in the cart C, a motion of taking the commodity one-by-one from the cart C, a motion of moving the commodity through the reading region 39 and causing the commodity registration camera 23 to read the commodity symbol, and a motion of putting the commodity in a shopping bag. After finishing these motions for all commodities, the customer P operates the end key 212 and pays money equal to (or more than, if no exact cash is available in a case of cash payment) a total payment amount of the commodities. For example, the customer P performs a motion of depositing coins to the money depositing port 271 and/or setting bills in the money depositing port 273. If there is change as a balance of the amount of the payment, the customer P performs a motion of taking coin change from the money dispensing port 272 and/or bill change from the money dispensing port 274.

In the example, the commodity registration camera 23 captures the motion of the customer P moving the commodity through the reading region 39, the motion of the customer P putting the commodity in the shopping bag, the motion of the customer P placing the coins in the coin placing section 275 and moving the coins toward the money depositing port 271, the motion of the customer P depositing the coins to the money depositing port 271, the motion of the customer P taking the coin change of the coins dispensed to the money dispensing port 272, the motion of the customer P setting the bills in the money depositing port 273, and the motion of the customer P taking the bill change dispensed to the money dispensing port 274.

In order for a cart detection sensor 26 (see FIG. 5) to detect that the cart C has been placed in the cart placing section 42, the monitoring camera 25 captures a motion of the customer P taking the commodity from the cart C, a motion of the customer P moving the commodity through the reading region 39, a motion of the customer P putting the commodity in a shopping bag, a motion of the customer P placing coins in the coin placing section 275 and moving the coins toward the money depositing port 271, a motion of the customer P depositing the coins to the money depositing port 271, a motion of the customer P taking coin change dispensed to the money dispensing port 272, a motion of the customer P setting bills in the money depositing port 273, and a motion of the customer P taking bill change dispensed to the money dispensing port 274.

As illustrated in FIG. 5, the self-checkout POS terminal 1 includes a central processing unit (CPU) 11, a read only memory (ROM) 12, a random-access memory (RAM) 13, and a memory unit 14. The CPU 11 functions as a control entity. The ROM 12 stores various programs. Various data are loaded in the RAM 13. The memory unit 14 stores various programs and data. The CPU 11, the ROM 12, the RAM 13, and the memory unit 14 are connected to one another via a data bus 15. The CPU 11, the ROM 12, and the RAM 13 configure the control unit 100. The CPU 11 operates according to a control program stored in the ROM 12 or the memory unit 14 and loaded in the RAM 13, and the control unit 100 executes the control processing of the self-checkout POS terminal 1.

The RAM 13 includes a commodity information unit 131 that stores the commodity information of a commodity subjected to the commodity registration processing. The memory unit 14 is configured with a nonvolatile memory, such as a hard disc drive (HDD) or a flash memory, in which stored information is retained even if a power supply is turned off. The memory unit 14 includes a control program unit 141 that stores the control program. The memory unit 14 also includes an image storing unit 142 and an image storing unit 143. The image storing unit 142 stores the images captured by the commodity registration camera 23. The image storing unit 143 stores the images captured by the monitoring camera 25.

The control unit 100 is connected to the touch panel 21, which is one example of an operation unit, the display unit 22, the commodity registration camera 23, the printing unit 24, the monitoring camera 25, the cart detection sensor 26, the change machine 27, the card unit 28, and the light emitting unit 29 via the data bus 15 and a controller 16.

The touch panel 21 provides start key 211 at a position corresponding to the "start key" icon or the like displayed on the display unit 22. The touch panel 21 provides end key 212 at a position corresponding to the "end key" icon or the like displayed on the display unit 22.

The start key 211 is operated by the customer P to start the commodity registration processing at the self-checkout POS terminal 1. The end key 212 is operated by the customer P to finish the commodity registration processing and start the commodity settlement processing at the self-checkout POS terminal 1.

The display unit 22 includes, for example, a liquid crystal panel. The display unit 22 displays still images and/or moving images captured by the commodity registration camera 23 and the monitoring camera 25. The commodity registration camera 23 and the monitoring camera 25 include, for example, CCD image sensors to capture the images.

The control unit 100 is connected to the communication unit 30 via the data bus 15. The communication unit 30 is connected to other self-checkout POS terminals 1, the attendant PC, and the like via a communication line.

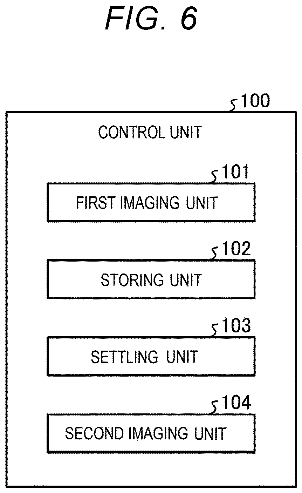

As illustrated in FIG. 6, the control unit 100 functions as a first imaging unit 101, a storing unit 102, a settling unit 103, and a second imaging unit 104 according to the control program stored in the ROM 12 or the control program unit 141 of the memory unit 14.

The first imaging unit 101 causes the commodity registration camera 23 to capture an image of a symbol attached to a commodity passing near the reading window 38 of the commodity registration camera 23 and capture images of the vicinity of the basket placing table 31 and the vicinity of the shopping bag table 32. For example, the first imaging unit 101 causes the commodity registration camera 23 to capture the image of the commodity symbol when the commodity passes near the reading window 38 or through the reading region 39 as well as the images of the motion of the customer P taking the commodity from the basket placing table 31, the motion of the customer P moving the commodity near the reading window 38 or through the reading region 39 and the motion of the customer P putting the commodity in the shopping bag set on the shopping bag table 32.

The storing unit 102 stores the images captured by the first imaging unit 101 in the image storing unit 142 in this example. The storing unit 102 stores the images captured by the second imaging unit 104 in the image storing unit 143 in this example.

The settling unit 103 executes the commodity settlement processing based on the symbol captured by the first imaging unit 101. For example, the settling unit 103 executes the commodity settlement processing of the commodity subjected to the commodity registration processing based on the symbol captured by the first imaging unit 101.

The second imaging unit 104 uses the monitoring camera 25 to capture the image of the cart placing section 42 where the cart C adjacent to the basket placing table 31 is placed.

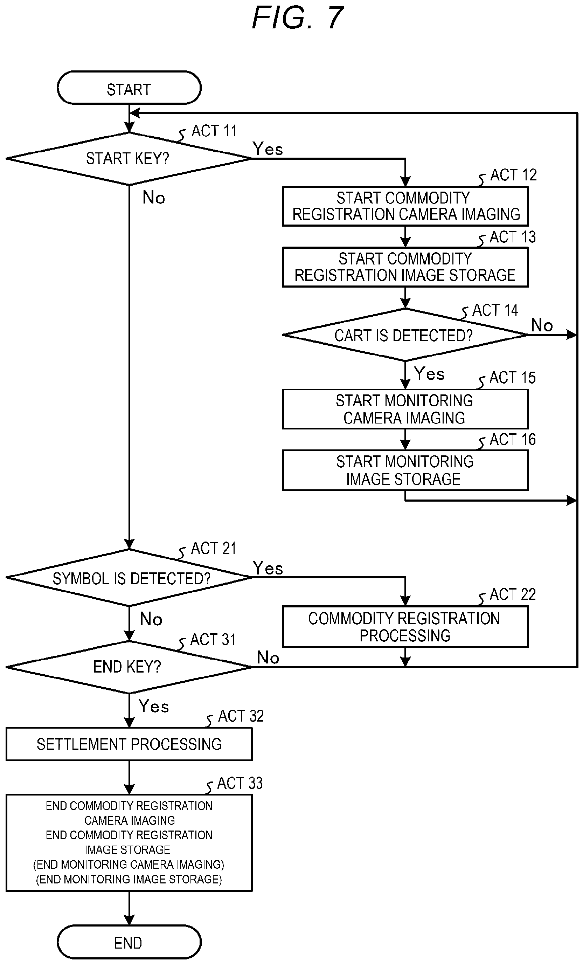

The self-checkout POS terminal 1 of the present embodiment performs the control processing following the flowchart illustrated as one example in FIG. 7. The processing starts once a customer P who has finished shopping places a basket K on the basket placing table 31 or a cart C in the cart placing section 42. The customer P then operates (e.g., selects or presses) the start key 211 displayed on the display unit 22.

The control unit 100 determines whether the start key 211 has been operated (Act 11). If the control unit 100 determines that the start key 211 has been operated (Yes in Act 11), the first imaging unit 101 starts capturing images with the commodity registration camera 23 (Act 12). The first imaging unit 101 causes the commodity registration camera 23 to operate, by which the registration camera 23 can capture an image of a symbol attached to a commodity that is passing near the reading window 38. The commodity registration camera 23 at this time also captures images of the vicinity of the basket placing table 31 and the vicinity of the shopping bag table 32 (Act 12). For example, the first imaging unit 101 causes the commodity registration camera 23 to operate so as to capture an image of the commodity symbol when the commodity passes near the reading window 38 but, during this registration process, the commodity camera 23 also generally captures images of the motion of the customer P taking the item from the basket placing table 31, the motion of the customer P moving the item near the reading window 38 and the motion of the customer P putting the item in a shopping bag set on the shopping bag table 32 (Act 12). The first imaging unit 101 may also image the motion of the customer P placing coins in the coin placing section 275 and moving coins toward the money depositing port 271, the motion of the customer P depositing the coins to the money depositing port 271, the motion of the customer P taking change dispensed to the money dispensing port 272, the motion of the customer P putting bills in the money depositing port 273 and the motion of the customer P taking change dispensed to the money dispensing port 274 (Act 12). The storing unit 102 stores the captured images in the image storing unit 142 (Act 13).

The control unit 100 also determines whether the cart detection sensor 26 has detected that the cart C is in the cart placing section 42 (Act 14). If the control unit 100 determines that the cart detection sensor 26 has detected the cart C in the cart placing section 42 (Yes in Act 14), the second imaging unit 104 starts capturing images with the monitoring camera 25 (Act 15). The second imaging unit 104 causes the monitoring camera 25 to capture images of the vicinity of the cart C in the cart placing section 42 and the vicinity of the shopping bag table 32 (Act 15). The second imaging unit 104 causes the monitoring camera 25 to operate and thus the monitoring camera 25 may capture images of the motion of the customer P taking the item from the cart C, the motion of the customer P moving the item near the reading window 38, and the motion of the customer P putting the item in a shopping bag set on the shopping bag table 32 (Act 15). The second imaging unit 104 may also capture images of the motion of the customer P placing coins in the coin placing section 275 and moving the coins toward the money depositing port 271, the motion of the customer P depositing the coins into the money depositing port 271, the motion of the customer P taking change dispensed to the money dispensing port 272, the motion of the customer P inserting bills in the money depositing port 273, and the motion of the customer P taking change dispensed to the money dispensing port 274 (Act 15). The storing unit 102 stores the captured images in the image storing unit 143 (Act 16). The control unit 100 then returns to Act 11.

If the control unit 100 determines that the cart detection sensor 26 has not detected the cart C in the cart placing section 42 (No in Act 14), the control unit 100 returns to Act 11. After the processing in Act 15 and the processing in Act 16 are executed, the control unit 100 stores a flag indicating to that effect in the RAM 13.

If the control unit 100 determines that the start key 211 has not been operated (No in Act 11), the control unit 100 next determines whether the first imaging unit 101 has imaged a commodity symbol (Act 21). For example, the control unit 100 determines whether the first imaging unit 101 captured an image of a commodity symbol. In general, the memory unit 14 stores a large number of patterns relating to commodity symbols in advance. If the control unit 100 determines that an image captured by the first imaging unit 101 matches or shows sufficient similarities to any one of the pre-stored symbol patterns in the memory unit 14, the control unit 100 determines that the first imaging unit 101 has imaged a commodity symbol. If the control unit 100 determines that the first imaging unit 101 has imaged a commodity symbol (Yes in Act 21), the control unit 100 analyzes the commodity symbol, acquires a commodity code that identifies the commodity to which the commodity symbol is attached, and executes commodity registration processing. The commodity registration processing includes retrieving commodity information (for example, a commodity name, a commodity price, and the like) corresponding to the acquired commodity code from a commodity master or the like stored in the memory unit 14 and then storing the retrieved commodity information in the commodity information unit 131 (Act 22). After executing the commodity registration processing, the control unit 100 returns to Act 11.

If the control unit 100 determines that a commodity symbol has not been imaged (No in Act 21), the control unit 100 then determines whether the end key 212 has been operated (Act 31). If the control unit 100 determines that the end key 212 has been operated (Yes in Act 31), the settling unit 103 executes commodity settlement processing based on the commodity information stored in the commodity information unit 131 (Act 32). That is, the settling unit 103 executes the commodity settlement processing based on the commodity information obtained according to a commodity symbol captured by the first imaging unit 101. The control unit 100 ends the imaging performed by the first imaging unit 101 using the commodity registration camera 23 (Act 33). The control unit 100 also ends the storing of the images in the image storing unit 142 by the storing unit 102. If the second imaging unit 104 had started the capturing of the images by the monitoring camera 25 according to the processing in Act 15 and if the storing unit 102 had started the storing of the captured images in the image storing unit 143 (that is, if the flag indicating that both the processing in Act 15 and the processing in Act 16 are executed has been stored in the RAM 13), the control unit 100 ends the capturing of the images by the second imaging unit 104 and the storing of the captured images in the image storing unit 143 (Act 33). The control unit 100 then ends the entire processing. If the control unit 100 that the end key 212 has not been operated (No in Act 31), the control unit 100 returns to Act 11.

According to the present embodiment, the self-checkout POS terminal 1 includes the basket placing table 31 on which a basket K or a commodity can be placed and a commodity registration camera 23 captures various images. The self-checkout POS terminal 1 also includes shopping bag table 32 on which a shopping bag can be placed for packing purchased items. The first imaging unit 101 causes the commodity registration camera 23 to capture an image of a commodity symbol attached to a commodity (item) that was passed near the commodity registration camera 23 The commodity registration camera 23 also images of the areas around the basket placing table 31 and the shopping bag table 32. The storing unit 102 stores the captured images. The settling unit 103 is provided for executing the commodity settlement processing based on the registered commodity symbols that have been imaged by the commodity registration camera 23 (under control of the first imaging unit 101) .

The self-checkout POS terminal 1 of the present embodiment causes the commodity registration camera 23 to capture images not just of commodity symbols attached to items being purchased but also images of various motions (including gestures, actions, and the like) of the customer P during the performance of commodity registration operations and/or associated transaction settlement operations. Therefore, it is possible to more reliably capture pictures/images of a customer P during such operations irrespective of the particular position(s) where the customer P stands, the posture(s) adopted by the customer P, which might otherwise, intentionally or inadvertently, block or obscure the view of the monitoring camera 25 or the like.

In the self-checkout POS terminal 1 of the present embodiment, the reading window 38 is provided substantially perpendicularly on the erected surface 43 of the self-checkout device to face towards the customer P who operates the self-checkout POS terminal 1. The first imaging unit 101 images various motions of the customer P from the reading window 38. Therefore, it is possible to better image the motions of the customer P when such motions are blocked from view of another camera by the position where the customer P stands, the posture of the customer P during operations, and the like.

According to the present embodiment, the monitoring camera 25 captures images of the motion of the customer P taking a commodity from the cart C, the motion of the customer P moving the commodity through the reading region 39, the motion of the customer P putting the commodity in a shopping bag, the motion of the customer P placing coins in the coin placing section 275 and moving the coins toward the money depositing port 271, the motion of the customer P depositing the coins to the money depositing port 271, the motion of the customer P taking coin change dispensed to the money dispensing port 272, the motion of the customer P setting bills in the money depositing port 273, and the motion of the customer P taking bill change dispensed to the money dispensing port 274. The monitoring camera 25 may be capable of capturing images of other motions, gestures, actions, and the like of the customer P. In some examples, the monitoring camera 25 may be able to image of just the motion of the customer P taking a commodity from the cart C.

In the present embodiment, the image of the customer's motion of taking a commodity from the cart C is captured by the monitoring camera 25. In another embodiment, if the cart C can be placed at the position of or sufficiently closer to the basket placing table 31, the image of the customer's motion of taking a commodity from the cart C can be captured by the commodity registration camera 23. In the latter case, the monitoring camera 25 may not be necessary for the purpose of imaging such a motion. If the position of the cart placing section 42 can also be imaged by the commodity registration camera 23, the monitoring camera 25 may not be necessary. Thus, in some examples, cart C placed in the cart placing section 42 may be imaged by the commodity registration camera 23.

In the present embodiment, the commodity registration camera 23 captures the images of the money depositing port 271, the money dispensing port 272, the money depositing port 273, and the money dispensing port 274. In another embodiment, for example, the commodity registration camera 23 may capture the images of only the money depositing port 271 and the money depositing port 273. In this case, the first imaging unit 101 images, besides the commodity symbol, the vicinity of the basket placing table 31, the commodity passing the reading region 39, the vicinity of the shopping bag table 32, the vicinity of the money depositing port 271, and the vicinity of the money depositing port 273. In still another embodiment, the commodity registration camera 23 may not capture an image of any of the money depositing port 271, the money dispensing port 272, the money depositing port 273, and the money dispensing port 274. In such a case, the first imaging unit 101 images, besides the commodity symbol, the vicinity of the basket placing table 31, the commodity passing the reading region 39, and the vicinity of the shopping bag table 32.

In the present embodiment, the shopping bag is merely one example of the commodity storing body. The commodity storing body may be a box, a basket, or the like.

In an embodiment, as shown in the flowchart of FIG. 7, the imaging process by the first imaging unit 101 using the commodity registration camera 23 (Act 12) and the image storing process by the storing unit 102 using the image storing unit 142 (ACT 13) are executed first, and then, if the control unit 100 determines that the cart detection sensor 26 has detected the cart C in the cart placing section 42 (Yes in Act 14), the imaging process by the second imaging unit 104 using the monitoring camera 25 (Act 15 and the image storing process by the storing unit 102 using the image storing unit 143 are executed (Act 16). In another embodiment, the process in both ACT 12 and Act 15 may be simultaneously started and, only in the case of Yes in Act 14, might the process in Act 16 be performed. In such an embodiment, if the start key 211 displayed by the display unit 22 is operated by the customer P, the imaging processes by the first imaging unit 101 and the second imaging unit 104 may be started at the same time.

The programs executed by the self-checkout POS terminal 1 according to the present disclosure can be recorded in a non-transitory computer-readable recording media, such as a CD-ROM, a flexible disk (FD), a CD-R, and a Digital Versatile Disk (DVD), as files of an installable format or an executable format.

The programs executed by the self-checkout POS terminal 1 according to the present disclosure may be provided by being stored on a computer connected to a network, such as the Internet, and downloaded through the network. The programs executed by the self-checkout POS terminal 1 according to the present disclosure may be provided or distributed through a network, such as the Internet.

The programs executed by the self-checkout POS terminal 1 according to the present disclosure may be provided by being incorporated in ROM or the like in advance.

While certain embodiments have been described, these embodiments have been presented by way of example only and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

## Claims

1. A self-checkout device, comprising:
a commodity placing section where a commodity to be purchased can be placed prior to commodity registration processing;
a commodity registration camera is positioned to capture images for the commodity registration processing;
a commodity storing section where the commodity can be stored in a commodity storing body after registration; and
a processor configured to:
cause the commodity registration camera to capture images of a symbol attached to a commodity that is passing near the commodity registration camera and images of a vicinity of the placing section and a vicinity of the storage section,
store the images in a data storage device; execute the commodity registration processing of the commodity based on the image of the commodity symbol; and
execute commodity settlement processing after the commodity registration processing.

2. The self-checkout device according to claim 1, wherein the commodity registration camera is positioned to face a customer operating the self-checkout device.

3. The self-checkout device according to claim 2, wherein the commodity registration camera is directed substantially perpendicular to a front surface of the self-checkout device.

4. The self-checkout device according to any of claims 1 to 3, further comprising:
a money depositing section to which money can be deposited for the commodity settlement processing, wherein
the commodity registration camera is further positioned to capture an image of a vicinity of the money depositing section.

5. The self-checkout device according to any of claims 1 to 4, further comprising:
a start key for starting the commodity registration processing, wherein
the processor stores the captured images after operation of the start key until the end of the commodity settlement processing, further preferably comprising:
a display device on which the start key is displayed.

6. The self-checkout device according to any of claims 1 to 5, further comprising:
a monitoring camera at a position different from the commodity registration camera, wherein
the processor is further configured to:
cause the monitoring camera to capture images of a cart section where a shopping cart can be placed, and
store the captured images in the data storage device.

7. The self-checkout device according to any of claims 1 to 6, wherein the processor is configured to acquire additional images from a monitoring camera mounted above the self-checkout device and store the additional images in the data storage device, wherein preferably the monitoring camera acquires images of a cart section where a shopping cart can be placed.

8. The self-checkout device according to any of claims 1 to 7, wherein the commodity registration camera is positioned to also capture images of a cart section where a shopping cart can be placed.

9. The self-checkout device according to any of claims 1 to 8, wherein the processor is further configured to cause the commodity registration camera to capture an image of customer motions during operation of the self-checkout device.

10. The self-checkout device according to any of claims 1 to 9, wherein the commodity registration camera captures images continuously from the start of the commodity registration processing until the end of the commodity settlement processing.

11. A self-checkout device, comprising:
a commodity placing section where a commodity to be purchased can be placed prior to commodity registration processing and commodity settlement processing;
a commodity registration camera configured to capture images of items passed in front of commodity registration window for the commodity registration processing;
a monitoring camera configured to capture images of a cart section where a shopping cart can be placed;
a commodity storing section where the item can be placed after commodity registration processing; and
a processor configured to:
cause the commodity registration camera to begin imaging and capture an image of a commodity symbol attached to the item that passes in front of the commodity registration window during commodity registration,
store a plurality of images captured by the commodity registration camera during the commodity registration processing, and
execute commodity settlement processing of the items registered in the commodity registration processing, wherein
the commodity registration camera has a field of view including at least portions of commodity placing section and the commodity storing section, and
the processor is configured to store images captured by the commodity registration camera with and without the detection of a commodity symbol in the images.

12. The self-checkout device according to claim 11, wherein images are captured by the commodity registration camera continuously from the start of the commodity registration processing to the end of the commodity settlement processing.

13. The self-checkout device according to claim 11 or 12, wherein the commodity registration camera begins acquiring images when a cart is detected in the cart section.

14. The self-checkout device according to any of claims 11 to 13, wherein the commodity registration camera begins acquiring images when a registration start key is pressed on a display screen of the self-checkout device.

15. A non-transitory computer-readable medium storing a program which, when executed, causes a self-checkout device to perform a method comprising:
causing a commodity registration camera of a self-checkout device to begin acquiring images;
capturing an image of a commodity symbol attached to a commodity,
capturing images of a vicinity of a commodity placing section and a vicinity of a commodity storing section;
storing the captured images in a data storage device;
executing commodity registration processing based on the image of the commodity symbol; and
executing commodity settlement processing based on the commodity registration processing.
